# DEMANDE DE BREVET EUROPEEN

(11) **EP 4 733 610 A1**
(43) Date de publication de la demande: **29.04.2026**
(21) Numéro de dépôt: 25210214.0
(22) Date de dépôt: 21.10.2025
(51) Int. Cl.: F16C 11/04, B64C 1/18, F16B 5/02, F16C 11/12, F16C 27/06

(54) **DISPOSITIF DE JONCTION POUR AÉRONEF PERMETTANT UN DEGRÉ DE LIBERTÉ DANS UNE DIRECTION**

(30) Priorité: 25.10.2024 FR 2411668
(71) Demandeur: AIRBUS OPERATIONS (S.A.S.), 31060 Toulouse (FR)
(72) Inventeur: ROLLAND, Bernard, 31060 Toulouse (FR)
(74) Mandataire: BCF Global

(57) **Abrégé**

Dispositif pour la jonction d'un premier élément d'un aéronef à un deuxième élément d'un aéronef, comprenant une première partie de liaison (2) destinée à être solidaire dudit premier élément et une deuxième partie de liaison (3) destinée à être solidaire dudit deuxième élément, le dispositif (1) comprenant une bague de forme oblongue (10), le dispositif (1) comprenant un axe de liaison (9) disposé dans la bague oblongue (10) de sorte à être bloqué dans la bague oblongue (10) dans une première direction (Z) et libre dans une deuxième direction (X), le dispositif (1) comprenant au moins une pastille en matériau élastomère (14, 15) dans laquelle est inséré l'axe de liaison de sorte à réduire le déplacement de l'axe de liaison (9) dans la deuxième direction (X).

## Description

### Domaine technique

La présente invention se rapporte à un dispositif de jonction pour un aéronef.

### Technique antérieure

En vol, notamment en phase de croisière, un aéronef est soumis à des températures extérieures pouvant atteindre -50°C, tandis que l'intérieur est maintenu à des températures comprises généralement entre 20°C et 24°C. Cet écart important de température soumet la structure de l'avion à de fortes contraintes, telles que, par exemple, une compression thermique dans un sens longitudinal, qui génère notamment une déformation imposée du plancher du cockpit par rapport au fuselage, et peut endommager le plancher du cockpit.

Le but de l'invention est de remédier au moins partiellement à cet inconvénient.

### Résumé

A cet effet, il est proposé un dispositif pour la jonction d'un premier élément d'un aéronef à un deuxième élément d'un aéronef, comprenant une première partie de liaison destinée à être solidaire dudit premier élément et une deuxième partie de liaison destinée à être solidaire dudit deuxième élément, la première partie de liaison comprenant une bague de forme oblongue, le dispositif comprenant un axe de liaison disposé dans la bague oblongue de sorte à être bloqué dans la bague dans une première direction et libre dans une deuxième direction, le dispositif comprenant au moins une pastille en matériau élastomère dans laquelle est inséré l'axe de liaison de sorte à réduire le déplacement de l'axe de liaison dans la deuxième direction.

Grâce au comportement anisotrope du dispositif selon la présente invention, qui assure un blocage dans la première direction et permet une translation ralentie dans la deuxième direction, la déformation imposée sur le plancher au cours d'un vol de l'aéronef ne produit pas de charge significative dans la jonction 1 dans la direction deuxième direction. Et, dans la première direction verticale, la charge provenant du plancher du cockpit peut être transférée de la poutre longitudinale à la poutre transversale de manière rigide, par le contact mécanique entre les pièces métalliques que sont l'axe de liaison et la bague oblongue.

Selon un autre aspect, la deuxième direction est orthogonale à la première direction.

Selon un autre aspect, un diamètre de l'axe de liaison coïncide avec une largeur de la bague oblongue.

Selon un autre aspect, le dispositif comprend au moins deux bagues cylindriques empilées le long de l'axe de liaison, chacune desdites bagues cylindriques étant insérée dans ladite au moins une pastille en élastomère.

Selon un autre aspect, le dispositif comprend trois bagues cylindriques empilées.

Selon un autre aspect, le dispositif comprend au moins une première pastille en élastomère et au moins une deuxième pastille en élastomère disposées de part et d'autre de la bague oblongue, l'axe de liaison étant inséré dans chacune des pastilles en élastomère.

Selon un autre aspect, l'élastomère présente une rigidité inférieure ou égale à 3000 N/mm.

Selon un autre aspect, l'axe de liaison est réalisé en acier.

Selon un autre aspect, la bague oblongue est réalisée en cupronickel.

L'invention a également pour objet un aéronef, comprenant un dispositif de jonction tel que décrit précédemment.

Selon un autre aspect, le premier élément est une traverse du fuselage, par exemple d'un plancher de cockpit et le deuxième élément est une poutre longitudinale de fuselage.

L'invention a également pour objet un dispositif pour la jonction d'un premier élément d'un aéronef à un deuxième élément d'un aéronef, le dispositif comprenant une première partie de liaison destinée à être solidaire dudit premier élément et une deuxième partie de liaison destinée à être solidaire dudit deuxième élément, le dispositif comprenant un logement de forme oblongue, le dispositif comprenant un axe de liaison disposé dans la bague oblongue, le dispositif comprenant un moyen de fixation de l'axe dans une première direction, conformé pour que l'axe repose en appui rigide contre ledit logement oblong dans ladite première direction, le dispositif comprenant également un moyen de fixation de l'axe dans une deuxième direction, orthogonale à la première direction, conformés pour que l'axe repose en appui souple dans ledit logement oblong.

### Brève description des dessins

D'autres caractéristiques, détails et avantages apparaîtront à la lecture de la description détaillée ci-après, et à l'analyse des dessins annexés, sur lesquels :
**Fig. 1**

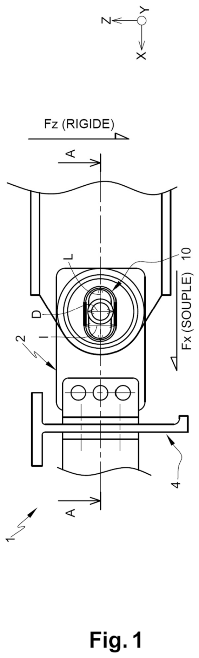

   [Fig. 1] est une vue schématique de côté d'un dispositif de jonction d'un premier panneau d'un aéronef à un deuxième panneau d'un aéronef selon un mode de réalisation de la présente invention.
**Fig. 2**

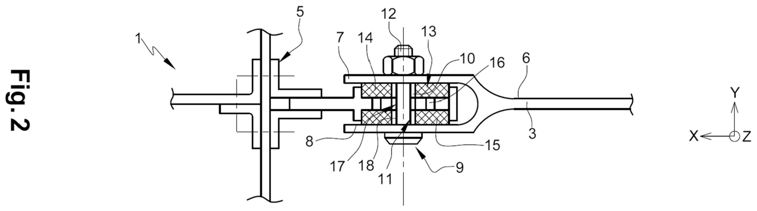

   [Fig. 2] est une vue schématique d'une coupe selon une direction A-A du dispositif de jonction de la figure 1.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Sur les figures, on a illustré un repère orthonormé (X, Y, Z) pour simplifier la compréhension de la description de la présente invention. La direction Z correspond à une direction verticale (axe de lacet), la direction X correspond à une direction longitudinale de l'aéronef (axe de roulis), et la direction Y correspond à une direction transversale (axe de tangage).

Comme visible sur les figures, l'invention a pour objet un dispositif, référencé 1 sur les figures, pour la jonction d'un élément de l'aéronef à un deuxième élément de l'aéronef.

Sur le mode de réalisation illustré, et de façon non limitative, le premier élément est une traverse, par exemple du plancher du cockpit de l'aéronef, et le deuxième élément est une poutre longitudinale.

Le dispositif de jonction 1 comprend une première partie 2, destinée à être solidaire de la traverse, et une deuxième partie 3, destinée à être solidaire de la poutre longitudinale.

Sur le mode de réalisation illustré, et de façon non limitative, le premier élément 2 est une ferrure de liaison tandis que le deuxième élément 3 est une fourchette.

Comme visible sur les figures, la ferrure de liaison 2 est solidaire de la traverse 4 de l'aéronef via un ensemble de cornières 5 à laquelle elle est par exemple vissée ou rivetée.

Comme également visible sur les figures, la fourchette 3 comprend une branche principale 6 qui se dissocie le long de la direction X en deux branches 7, 8, dites respectivement supérieure et inférieure, espacées l'une de l'autre de sorte à délimiter un volume interne V de la fourchette 3.

Le dispositif de jonction 1 comprend un axe de liaison 9, s'étendant longitudinalement le long de la direction Y. L'axe de liaison 9 est de préférence réalisé en matériau acier 45NCD16.

Comme il ressort des figures, la ferrure de liaison 1 comprend un logement muni d'une bague de forme oblongue 10, dans laquelle est inséré l'axe de liaison 9. De préférence, la bague oblongue 10 est réalisée en matériau cupronickel, afin de réduire le coefficient de frottement entre l'axe de liaison 9 et la bague oblongue 10 et, de ce fait, minimiser l'effet d'usure entre l'axe de liaison 9 et la bague oblongue 10.

Les dimensions de l'axe de liaison 9 et de la bague oblongue 10 sont telles que l'axe 9 repose contre la bague oblongue 10 dans la direction Y tandis que l'axe 9 est libre dans la direction X, comme il ressort clairement des figures 1 et 2. Sur la figure 1, on constate qu'un diamètre D de l'axe 9 coïncide avec une largeur I de la bague 10, ce qui contribue à bloquer l'axe dans les directions Y et Z. Sur les figures 1 et 2, on constate que le diamètre D de l'axe 9 est strictement inférieur à une longueur L de la bague 10, ce qui laisse libre l'axe 9 dans la direction X.

Le dispositif de jonction 1 comprend un moyen de fixation rigide 11 de l'axe de liaison 9 contre la bague oblongue 10 dans la direction Z. Le moyen de fixation rigide 11 comprend par exemple un écrou 12 posé contre la bague oblongue 10.

Comme visible sur les figures 1 et 2, l'axe de liaison 9 est disposé à distance de la bague oblongue 10 dans au moins un plan (X, Y).

Le dispositif de jonction 1 comprend également un moyen de fixation souple 13 de l'axe de liaison 9 dans la direction X. Le moyen de fixation souple 13 comprend au moins une pastille réalisée en matériau élastomère, solidaire de la ferrure de liaison 2. L'élastomère a avantageusement une rigidité faible, de préférence inférieure ou égale à 3000 N/mm. Chaque pastille limite le déplacement de l'axe de liaison 9 dans la direction X.

Sur le mode de réalisation illustré, le dispositif de jonction 1 comprend deux pastilles en élastomère 14, 15 disposées dans le volume interne V de la fourchette 3. La pastille 14 est disposée contre la ferrure de liaison 2, la branche supérieure 7 et la bague oblongue 10. La pastille 15 est disposée contre la ferrure de liaison 2, la branche inférieure 8 et la bague oblongue 10.

Le dispositif de jonction 1 comprend également au moins une bague cylindrique de serrage de l'axe de liaison 9. Sur le mode de réalisation illustré, le dispositif de jonction 1 comprend trois bagues cylindriques empilées de long de la direction Y, appelées respectivement bague supérieure, 16, centrale, 17, et inférieure, 18. Chacune des bagues cylindriques 16 à 18 est de préférence réalisée en matériau acier 45NCD16. L'empilement des bagues cylindriques 16 à 18 dans la direction Y permet de serrer l'axe 9 sans précontraindre la fourchette 3. Le contact mécanique entre chaque bague cylindrique et l'axe de liaison 9 fait partie du moyen de fixation rigide 11.

Comme particulièrement visible sur la figure 2, la bague cylindrique supérieure 16 repose contre la pastille élastomère 14, tandis que la bague cylindrique inférieure 18 repose contre la pastille élastomère 15. L'appui de l'axe de liaison 9 contre les pastilles 14, 15 assure l'appui souple de l'axe 9 dans la direction X.

Comme visible sur la figure 2, l'axe de liaison 9 traverse, dans la direction Y, les branches supérieure et inférieure 6, 7, de la fourchette 3, la bague oblongue 10 et les pastilles en élastomère 14 et 15.

Ainsi, le moyen de fixation rigide 11 comprenant le contact rigide de l'axe contre les pièces métalliques (branches 6, 7, de la fourchette 3, bagues cylindriques 16 à 18, bague oblongue 10) et le serrage par écrou ou rondelle, assure un degré de liberté nul dans la direction Z. Le moyen de fixation souple 13 comprenant chaque pastille en élastomère 14, 15, assure un degré de liberté non nul dans la direction X. Dit autrement, le dispositif 1 permet de faire jonction entre les éléments de l'aéronef en autorisant un déplacement dans une direction (la direction X sur les figures) par l'utilisation d'élastomère tout en bloquant le déplacement dans une ou plusieurs autres directions perpendiculaires par contact mécanique rigide (les directions Y et Z sur les figures). Le dispositif 1 comprenant à la fois les pastilles en élastomère et un contact rigide entre les pièces métalliques (axe de liaison et fourchette, axe de liaison et bague oblongue) assure un comportement anisotrope du dispositif 1. Dans la direction longitudinale (X), les pastilles en élastomère 14, 15 permettent un déplacement en douceur grâce à la faible rigidité de l'élastomère (inférieure à 3000 N/mm), de sorte que la déformation imposée sur le plancher au cours d'un vol de l'aéronef ne produit pas de charge significative dans la jonction 1. Dans la direction verticale Z, la charge provenant du plancher du cockpit est transférée de la poutre longitudinale à la poutre transversale de manière rigide, par le contact mécanique entre les pièces métalliques que sont l'axe de liaison 9, les bagues cylindriques 13 et la bague oblongue 10.

Et, la ferrure de liaison 2 est reprise par l'intermédiaire des cornières 5 sur la traverse 4 afin de reboucler les efforts introduits sur le plancher du cockpit dans la liaison hybride élasto-métallique.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Dispositif pour la jonction d'un premier élément d'un aéronef à un deuxième élément d'un aéronef, comprenant une première partie de liaison (2) destinée à être solidaire dudit premier élément et une deuxième partie de liaison (3) destinée à être solidaire dudit deuxième élément, le dispositif (1) comprenant une bague de forme oblongue (10), le dispositif (1) comprenant un axe de liaison (9) disposé dans la bague oblongue (10) de sorte à être bloqué dans la bague oblongue (10) dans une première direction (Z) et libre dans une deuxième direction (X), le dispositif (1) comprenant au moins une pastille en matériau élastomère (14, 15) dans laquelle est inséré l'axe de liaison de sorte à réduire le déplacement de l'axe de liaison (9) dans la deuxième direction (X).

2. Dispositif selon la revendication précédente, dans lequel un diamètre (D) de l'axe de liaison (9) coïncide avec une largeur (I) de la bague oblongue (10).

3. Dispositif selon l'une des revendications précédentes, comprenant au moins deux bagues cylindriques (16, 17, 18) empilées le long de l'axe de liaison (9), chacune desdites bagues cylindriques (16, 17, 18) étant insérée dans ladite au moins une pastille en élastomère (14, 15).

4. Dispositif selon la revendication précédente, comprenant trois bagues cylindriques empilées (16, 17, 18).

5. Dispositif selon l'une des revendications précédentes, comprenant au moins une première pastille en élastomère (14) et au moins une deuxième pastille en élastomère (15) disposées de part et d'autre de la bague oblongue (10), l'axe de liaison (9) étant inséré dans chacune des pastilles en élastomère (14, 15).

6. Dispositif selon l'une des revendications précédentes, dans lequel l'élastomère présente une rigidité inférieure ou égale à 3000 N/mm.

7. Dispositif selon l'une des revendications précédentes, dans lequel l'axe de liaison (9) est réalisé en acier.

8. Dispositif selon l'une des revendications précédentes, dans lequel la bague oblongue (10) est réalisée en cupronickel.

9. Aéronef, comprenant un dispositif de jonction selon l'une des revendications précédentes.

10. Aéronef selon la revendication précédente, dans lequel le premier élément est une traverse du fuselage, par exemple d'un plancher de cockpit et le deuxième élément est une poutre longitudinale de fuselage.
